# EUROPÄISCHE PATENTSCHRIFT

(11) **EP 2 484 561 B1**
(45) Veröffentlichungstag und Bekanntmachung des Hinweises auf die Patenterteilung: **20.11.2013**
(21) Anmeldenummer: 12151494.7
(22) Anmeldetag: 18.01.2012
(51) Int. Cl.: B60R 19/03

(54) **Stoßfängeranordnung**
Bumper system
Agencement de pare-chocs

(30) Priorität: 02.02.2011 DE 102011010174
(43) Veröffentlichungstag der Anmeldung: 08.08.2012
(73) Patentinhaber: Benteler Automobiltechnik GmbH, 33102 Paderborn (DE)
(72) Erfinder: Lütke-Bexten, Ulrich, 33104 Paderborn (DE); Roll, Michael, 32049 Herford (DE); Mollemeier, Elmar, 33129 Delbrück (DE); Kettler, Markus, 33106 Paderbon (DE)
(74) Vertreter: Ksoll, Peter

(56) Entgegenhaltungen:
- EP-A1- 1 595 749
- DE-A1- 19 538 844
- DE-A1- 19 603 958
- DE-A1- 19 904 879
- US-A1- 2005 285 414

## Beschreibung

Die vorliegende Erfindung betrifft eine Kraftfahrzeugstoßfängeranordnung mit einem über Crashboxen an Längsträgern gekoppelten Querträger gemäß den Merkmalen im Oberbegriff von Patentanspruch 1.

Der Aufbau eines Kraftfahrzeuges weist üblicherweise zahlreiche Träger auf, deren Profile einen konstanten Querschnitt besitzen. Diese Träger dienen dazu, Zugkräfte aufzunehmen, deren Amplituden und Richtungen variabel sind. Einige Träger sind jedoch dazu bestimmt, ein Höchstmaß an Energie zu absorbieren, wenn sie mit einer Kraft aus einer vorgegebenen Richtung beaufschlagt werden. Stoßfänger sind üblicherweise aus dem Stand der Technik bekannt an der Vorder- bzw. Rückseite eines Kraftfahrzeuges zur Absorption und Ableitung von Stoßenergie angeordnet. Der Aufbau erfolgt hierbei über einen Querträger, welcher in der Regel mit der Karosserie über Crashboxen gekoppelt ist. Oftmals ist hierzu der Querträger über die Crashboxen mit Längsträgern der Karosserie gekoppelt.

Die Anforderungen zur Reduzierung des CO2-Austoßes bzw. die geforderte Verminderung des Flottenverbrauches der Kraftfahrzeughersteller verlangen eine konsequente Fortsetzung von Leichtbaulösungen in allen Bereichen des Kraftfahrzeugbaus. Insbesondere sind auch sicherheitsrelevante Crashbauteile, die eigentlich ein hohes Maß an Werkstofffestigkeit aufweisen müssen, Leichtbaulösungen zu unterziehen.

Hierbei werden Stoßfängersysteme bzw. Querträger aus vergüteten oder hochfesten Stählen hergestellt, oder aber es wird auch auf Aluminiumwerkstoffe zurückgegriffen.

Bei der herzustellenden Stoßfängeranordnung muss der Spagat zwischen herstellereigenen Designanforderungen sowie gesetzlichen und herstellereigenen Sicherheitsanforderungen geleistet werden. Zur Formgebung von Kraftfahrzeugen sind diese oft im Bereich der Front oder des Hecks mit einer Front- bzw. Heckschürze aus Kunststoff ausgestattet. Die Form der jeweiligen Schürzen geben ebenso die Form des darunter liegenden Querträgers vor. Damit kein Wirküberstand verschwendet wird, besteht die Anforderung an den Querträger, in möglichst geringem Abstand hinter der Schürze angeordnet zu werden. Insgesamt sind jedoch die Überhänge und damit verbunden die Gesamtfahrzeuglänge gering zu halten, sodass der Bauraum zugunsten von Antriebskomponenten oder aber des Insassenraumes besser genutzt werden kann.

Ebenfalls muss dabei berücksichtigt werden, dass eine besonders einfache Erstmontage gegeben ist, sowie im Crashfall versicherungsseitig leichte und kostengünstige Reparaturmöglichkeiten erwünscht sind.

Aufgrund immer modernerer Technik, beispielsweise durch passive und aktive Sicherheits- und Komfortsysteme, beispielsweise Abstandssensoren, Parksensoren, Videoüberwachung während der Fahrt oder Ähnlichem, müssen die Querträger aufwendig geformt, gebogen, verprägt, beschnitten, gelocht oder aber in sonstiger Art und Weise mechanisch bearbeitet werden. Diese Fertigungsvorgänge machen die Stoßfängersysteme teuer. Ebenfalls im heckseitigen Bereich aufgrund von Abgaseinwirkung oder aber aufgrund von Langlebigkeitsaspekten sind die Stoßfängeranordnungen zusätzlich einer chemischen oder physikalischen Behandlung zu unterziehen, insbesondere wenn diese aus Stahl gefertigt sind.

An die Stoßfängeranordnung bzw. den Querträger selber sind wiederum verschiedene crashrelevante Anforderungen gestellt, sodass diese, beispielsweise bei low speed- oder aber high speed-Tests, bei Kollisionen mit einem Fußgänger oder anderen erdenklichen Crashanforderungen jeweils bestmögliche Crashperformanceeigenschaften zeigt. Besonders bei einem Frontalcrash kommt es oftmals zu einem Verbiegen des Querträgers und damit zu einem Verbiegen der Crashboxen nach Außen. Hierdurch werden die Anbindungspunkte der Crashboxen oftmals durch nur geringe Kräfte ausgehebelt, sodass der gesamte zum Crashenergieabbau zur Verfügung stehende Weg nicht mehr gegeben ist.

Aus der gattungsgemäßen DE 199 04 879 A1 ist eine Stoßfängeranordnung bekannt, bei der ein Querträger als Mehrkammerhohlprofil aus einer Leichtmetalllegierung hergestellt ist. Der Querträger weist einen über die Querrichtung des Kraftfahrzeugs bogenförmigen Verlauf auf und ist über Crashboxen mit Längsträgern des Kraftfahrzeugs gekoppelt. Ein solcher Querträger ist aufgrund des bogenförmigen Verlaufs nur mit erhöhtem Kosteneinsatz herstellbar, da entweder das Leichtmetallprofil gebogen extrudiert werden muss oder aber nach dem Extrudieren gebogen wird.

Ferner sind aus der DE 196 03 958 A1 sowie aus der EP 1 595 749 A1 und der US 2005/0285414 A1 Stoßfängeranordnungen bekannt, bei denen ein Querträger quer zur Kraftfahrzeugrichtung angeordnet ist und über Crashboxen mit dem Kraftfahrzeug abgestützt ist.

Aufgabe der vorliegenden Erfindung ist es daher, ausgehend vom Stand der Technik, eine Kraftfahrzeugstoßfängeranordnung bereitzustellen, die ein geringes Eigengewicht und eine einfache Konstruktion aufweist, bei gleichzeitig guten Crasheigenschaften und besonders günstiger Produzierbarkeit.

Die zuvor genannte Aufgabe wird erfindungsgemäß mit einer Kraftfahrzeugstoßfängeranordnung gemäß den Merkmalen im Patentanspruch 1 gelöst.

Vorteilhafte Ausführungsvarianten der vorliegenden Erfindung sind Bestandteil der abhängigen Patentansprüche.

Die erfindungsgemäße Kraftfahrzeugstoßfängeranordnung mit einem über Crashboxen an Längsträgern gekoppeltem Querträger, wobei der Querträger aus einem Strangpressprofil besteht, ist erfindungsgemäß dadurch gekennzeichnet, dass auf der den Crashboxen gegenüberliegenden Seite des Querträgers ein Blechbauteil aus einer Stahllegierung mit dem Querträger stoffschlüssig und/oder formschlüssig gekoppelt ist und das der Querträger als Mehrkammerhohlprofil aus einem gradlinig verlaufenden Leichtmetall ausgebildet ist. Das Blechbauteil weist dabei eine in seiner Längsrichtung verlaufende Bogenform auf. Im Rahmen der Erfindung ist das Blechbauteil im Wesentlichen als zumindest in Fahrzeugquerrichtung gleichlang mit dem Querträger zu sehen. Es kann jedoch auch kürzer oder aber länger sein. Das Blechbauteil selber kann als kaltgeformtes, metallisches Bauteil oder aber auch als warmumgeformtes und pressgehärtetes Bauteil ausgebildet sein. Ebenso ist auch eine Leichtmetalllegierung zur Herstellung des Blechbauteils einsetzbar.

Hierbei wird erfindungsgemäß der Querträger aus einem Leichtmetallstrangpressprofil hergestellt. Das Strangpressprofil weist bereits durch den Herstellungsprozess einen geraden oder aber geradlinigen Verlauf auf. Es handelt sich dabei um ein Mehrkammerhohlprofil. Ein aufwendiges Streckbiegen oder sonstiges mechanisches Umformen oder Nachbearbeiten des Querträgers entfällt. Das Strangpressprofil kann erfindungsgemäß direkt im Herstellungsprozess an die gewünschten Crashsteifigkeiten angepasst sein. Das Mehrkammerhohlprofil weist hohe Steifigkeitswerte, insbesondere im Crashfall auf, bei gleichzeitig geringem Eigengewicht. Bei dem Leichtmetall handelt es sich bevorzugt um Aluminium oder Magnesium. Hierbei bietet das Herstellungsverfahren mittels Strangpressen den Vorteil, dass der Querträger abgehängt wird und somit besonders kostengünstig herstellbar ist, bei gleichzeitig hohen Crasheigenschaften und geringem Eigengewicht.

Eine die Crasheigenschaften vermindernde Nachbearbeitung oder Umformoperation entfällt. Da moderne Kraftfahrzeuge zur Erreichung geringer cw-Werte und zur Erlangung von formschönen Designvorgaben oftmals an Front oder Heck eine gekrümmte Form aufweisen, insbesondere eine in Fahrzeugquerrichtung gekrümmte Form, wird der zwischen dem geradlinig verlaufenden Strangpressprofil und einer Kunststoffaußenhaut verbleibende Bauraum bzw. Abstand durch ein zusätzliches Blechbauteil überbrückt, welches mit dem Querträger gekoppelt ist. Das Blechbauteil ist dabei frontseitig in Fahrtrichtung vor dem Querträger und heckseitig in Fahrtrichtung hinter dem Querträger angeordnet.

Dieses Blechbauteil kann beispielsweise angeschweißt oder aber auch an den Querträger oder aber die Crashboxen angeschraubt werden. Ebenfalls ist ein Nieten oder aber ein anderes Fügeverfahren möglich. Durch die Auswahl von verschiedenen Werkstoffen, Querschnittsgeometrien und/oder Wandstärken kann die erfindungsgemäße Kraftfahrzeugstoßfängeranordnung optimal an die jeweilige Crashanforderung angepasst werden. Gleichzeitig ist die erfindungsgemäße Kraftfahrzeugstoßfängeranordnung unter Berücksichtigung der Produktionstoleranzen besonders maßhaltig und gleichzeitig sehr kostengünstig produzierbar. Ebenfalls ist aufgrund des modularen Aufbaus der Kraftfahrzeugstoßfängeranordnung der Einsatz hochfester Werkstoffe, insbesondere höchstfester oder vergüteter Metall- oder aber Leichtmetallwerkstoffe möglich, insbesondere an den Bauteilen, die keinen aufwendigen Umformoperationen zur Formgebung erlegen sind.

Hierdurch ist eine Gewichtsreduzierung möglich, bei gleichzeitiger Einhaltung bzw. Erhöhung der Crashperformance einer vergleichbaren, aus dem Stand der Technik bekannten Kraftfahrzeugstoßfängeranordnung in herkömmlicher Bauweise.

Der Querträger und das Blechbauteil sind stoffschlüssig und/oder formschlüssig gekoppelt, insbesondere über eine Schraubverbindung und/oder Schweißverbindung. Die stoffschlüssige Kopplung ermöglicht dabei eine besonders kostengünstige Produktion, ist jedoch begrenzt durch die Wahl der Werkstoffeigenschaften. Im Falle von einander unterschiedlichen Werkstoffen oder aber nicht optimal thermisch fügbaren Werkstoffen, kann die erfindungsgemäße Kraftfahrzeugstoßfängeranordnung formschlüssig gekoppelt sein oder aber auch stoffschlüssig, beispielsweise durch ein Schweißlöten. Diese kann beispielsweise durch ein formschlüssiges Überlappen und Einrasten oder sonstige Formschlussmöglichkeiten hergestellt werden. Bevorzugt wird eine Schraubverbindung als formschlüssige Kopplungsmöglichkeit ausgewählt. Über die Schraubverbindung ist es zusätzlich möglich, im Reparaturfall eine besonders schnelle und kostengünstige Instandsetzung durchzuführen. Insbesondere, da bei leichten Auffahrunfällen das zusätzliche Blechbauteil mit bogenförmigem Verlauf ausgetauscht werden kann.

Die erfindungsgemäße Kraftfahrzeugstoßfängeranordnung eignet sich insbesondere zur Herstellung eines Systems, dass eine hohe Crashperformance bei gleichzeitig geringem Eigengewicht aufweist. Hierzu ist bevorzugt der Querträger aus einem Leichtmetall ausgebildet und/oder das Blechbauteil aus einer Stahllegierung hergestellt. Im Falle von metallischen oder aber leichtmetallischen Legierungen sind diese weiterhin besonders bevorzugt vergütet. Insbesondere kann das Blechbauteil mittels Warmumformen und Presshärten hergestellt sein. Der Einsatz von höchstfesten Stählen wird hierdurch ermöglicht. Beide Bauteile können separat voneinander vergütet oder anderweitig nachbehandelt werden. Beispielsweise ist eine partielle Wärmebehandlung und/oder Lackierung oder Beschichtung möglich.

In einer weiteren bevorzugten Ausführungsvariante überlappt das Blechbauteil den Querträger endseitig. Im Rahmen der Erfindung ist unter einer Überlappung zu verstehen, dass das Blechbauteil in Kraftfahrzeugquerrichtung an dem Querträger endseitig übersteht. Im Falle eines Offset-Crashs erfolgt somit eine Ableitung von seitlich versetzt auf das Fahrzeug frontal oder heckseitig auftreffenden Gegenständen und eine Ableitung nach Außen. Das Blechbauteil kann dabei insbesondere aus hochfestem Stahl ausgebildet sein, sodass hierdurch eine Ableitung besonders gut erfolgt.

Vorzugsweise weist das Blechbauteil hierzu jeweils endseitig zum Kraftfahrzeug hin gerichtet eine Krümmung auf. Durch die Krümmung wird ein versetzt auf das Kraftfahrzeug auftreffender Gegenstand oder aber ein anderweitiges Kraftfahrzeug bevorzugt abgeleitet oder aber die Auswirkung des Aufpralls des Gegenstandes wird gedämpft. Die Krümmung weist dabei insbesondere einen kleineren Radius auf, als der Radius des bogenförmigen Verlaufes. Im Rahmen der Erfindung steht das Blechbauteil selber insbesondere mehr als 5, vorzugsweise mehr als 10 und besonders bevorzugt mehr als 15 Zentimeter jeweils in Kraftfahrzeugquerrichtung außenseitig über dem Querträger.

Zur weiteren Erhöhung der Steifigkeit ist das Blechbauteil im Querschnitt C-förmig konfiguriert oder aber im Querschnitt hutförmig konfiguriert. Hierdurch wird erreicht, dass das Blechbauteil den Querträger formschlüssig überlappt bzw. überdeckt und gleichzeitig eine hohe Eigensteifigkeit gegen Biegung und Torsion aufweist. Besonders bevorzugt ist dazu das Blechbauteil zumindest an den Endseiten des Querträgers derart ausgebildet, dass es diesen zumindest abschnittsweise umfasst bzw. überlappt. Insbesondere sind dabei die Schenkel der C-förmigen oder aber hutförmigen Konfigurationen, die sich von dem jeweiligen Bodensteg aus erstrecken so ausgebildet, dass diese den Querträger übergreifen.

Der Bodensteg des Querschnittsprofils ist dabei immer so ausgebildet, dass er an der Fahrzeugfront nach vorne hin orientiert angeordnet ist und am Fahrzeugheck nach hinten hin orientiert angeordnet ist.

Zur Gewichtsreduzierung der erfindungsgemäßen Kraftfahrzeugstoßfängeranordnung können sowohl der Querträger, als auch das Blechbauteil Ausnehmungen aufweisen. Hierbei kann es sich beispielsweise um Löcher oder aber Lochbohrungen bzw. Ausschnitte handeln, die beispielsweise kreisrunde, elliptische, sternförmige oder aber eckige Querschnitte aufweisen. Im Rahmen der Erfindung wäre es auch möglich, dass in den Bereichen der Ausnehmungen Verstärkungen angeordnet sind, beispielsweise aus metallischen oder aber Faserverbundwerkstoffen oder aber, dass in den Ausnehmungen eine geringere Wandstärke des Materials gegenüber dem restlichen Querträger und/oder Blechbauteil vorhanden ist. Hierdurch wird bei annähernd gleichbleibender Biege- und Torsionssteifigkeit eine Gewichtsreduzierung von bis zu mehr als 20 %, insbesondere mehr als 30 % gegenüber einem vollmassiven Bauteil realisiert.

Im Rahmen der Erfindung weist der Querträger endseitig jeweils zwei Aufnahmeöffnungen auf, wobei jeweils eine außenliegende Aufnahmeöffnung als Langloch ausgebildet ist, vorzugsweise als außenseitig offenes Langloch. Im Rahmen der Erfindung sind die Aufnahmeöffnungen in Richtung der Kraftfahrzeughochachse orientiert. Das heißt im Rahmen eines geschlossenen hohlen Querschnittprofils schneidet die Aufnahmeöffnung dieses an einer Oberseite und einer Unterseite. Bevorzugt sind die Aufnahmeöffnungen in Kraftfahrzeugquerrichtung im Wesentlichen nebeneinander angeordnet. Dies bedeutet, eine Aufnahmeöffnung liegt außenseitig und in Relation hierzu ist eine weitere Aufnahmeöffnung weiter zur Fahrzeugmitte hin orientiert. Vorzugsweise weisen die Aufnahmeöffnungen einen Abstand zwischen 0,5 und 15 cm, insbesondere zwischen 1 und 10 Zentimeter auf. Hierdurch wird sichergestellt, dass aufgrund der innenliegenden Aufnahmeöffnungen das bogenförmige Blechbauteil lagefixiert in Relation zu dem Querträger gehalten wird.

Wird das bogenförmige Blechbauteil kraftfahrzeugmittig in Folge eines Frontalcrashes eingedrückt, so dienen die beiden innenliegenden Aufnahmeöffnungen mit eingestecktem Bolzen oder aber Niete als Drehachsen, wenngleich aufgrund der außenliegenden Aufnahmeöffnungen mit Langloch ein Längenausgleich der sich schwenkenden Enden des Blechbauteils gebildet ist. Durch die vorzugsweise außenseitige Öffnung des Langlochs wird ein Verschwenken auch bei starker Deformation ermöglicht. Ein Auseinanderschieben oder aber Ausreißen, sodass nicht die volle zur Verfügung stehende Crashperformance der Crashboxen im Falle eines Fahrzeugcrashes entfaltet werden kann, wird durch die erfindungsgemäßen Aufnahmeöffnungen vermieden.

Im Rahmen der Erfindung wird die Kraftfahrzeugstoßfängeranordnung insbesondere als Modulbausystem angewandt. So können mit der erfindungsgemäßen Anordnung gleichzeitig mehrere Fahrzeugklassen vom Kleinwagen bis zur Oberklassenlimousine mittels standardisiertem Querträger durch einfache Abänderung der Crashboxen bzw. des Blechbauteils modifiziert und angepasst werden. Aufgrund der hohen möglichen zu produzierenden Stückzahlen, welche auch fahrzeugklassenübergreifend einsetzbar sind, sinken wiederum die Produktionskosten, bei gleichzeitiger modular erweiterbarer bzw. anpassungsfähiger Crashperformance der Gesamtanordnung. Insbesondere kann somit auch auf die unterschiedlichen Crashanforderungen von Fahrzeugtypen reagiert werden, die auf verschiedenen Kontinenten angeboten werden. Beispielsweise kann somit der zur Verfügung stehende Bauraum von Fahrzeugen für den europäischen Markt und für den US-amerikanischen Markt jeweils optimal ausgenutzt werden.

Ein weiterer Vorteil der vorliegenden Erfindung ist, dass durch verschiedene geometrische Ausgestaltungen der einzelnen Komponenten, beispielsweise durch zusätzliche Sicken, Ausnehmungen, variierende Wandstärken oder aber auch verschiedene Duktilitäten des Materials von beispielsweise Crashbox Querträger und/oder Blechbauteil, auf verschiedene Crashanforderungen reagiert werden kann.

Eine weitere bevorzugte Ausführungsvariante der vorliegenden Erfindung sieht vor, dass das Blechbauteil zumindest abschnittsweise direkt an dem Querträger, insbesondere in einem Anbindungsbereich der Crashboxen in Längsrichtung des Querträgers anliegt. Im Falle eines Fahrzeugcrashes erfolgt somit eine direkte Kraftleitung von Blechbauteil an darunterliegenden Querträger und/oder dahinter befindliche Crashboxen. Vorzugsweise wird die Anlage durch eine Sicke bzw. Eindrückung des Blechbauteils im Anbindungsbereich der Crashboxen realisiert. Hierbei können jeweils verschiedene Sicken oder aber auch eine in dem Blechbauteil durchgehende Sicke ausgebildet sein.

Die zuvor und nachfolgend beschriebenen Merkmale sind für die vorliegende Erfindung beliebig kombinierbar, ohne den Rahmen der Erfindung zu verlassen.

Weitere Vorteile, Merkmale, Eigenschaften und Aspekte der vorliegenden Erfindung sind Bestandteil der nachfolgenden Beschreibung. Bevorzugte Ausführungsvarianten werden in den Figuren dargestellt. Diese dienen dem einfachen Verständnis der Erfindung. Es zeigen:
- Figur 1: zeigt eine perspektivische Vorderansicht einer erfindungsgemäßen Kraftfahrzeugstoßfängeranordnung;
- Figur 2: zeigt eine perspektivische Rückansicht einer erfindungsgemäßen Kraftfahrzeugstoßfängeranordnung;
- Figur 3: zeigt eine Draufsicht;
- Figur 4: zeigt eine perspektivische Frontansicht der erfindungsgemäßen Kraftfahrzeugstoßfängeranordnung ohne Blechbauteil;
- Figur 5: zeigt eine Draufsicht ohne Blechbauteil;
- Figur 6: zeigt eine perspektivische Ansicht einer Ausführungsvariante der erfindungsgemäßen Kraftfahrzeugstoßfängeranordnung mit zwei Sicken;
- Figur 7: zeigt eine Ausführungsvariante der erfindungsgemäßen Kraftfahrzeugstoßfängeranordnung mit einer Sicke und
- Figur 8: zeigt die in Figur 6 dargestellte Ausführungsvariante in einer Schnittansicht.

In den Figuren werden für gleiche oder ähnliche Bauteile dieselben Bezugszeichen verwendet, auch wenn eine wiederholte Beschreibung aus Vereinfachungsgründen entfällt.

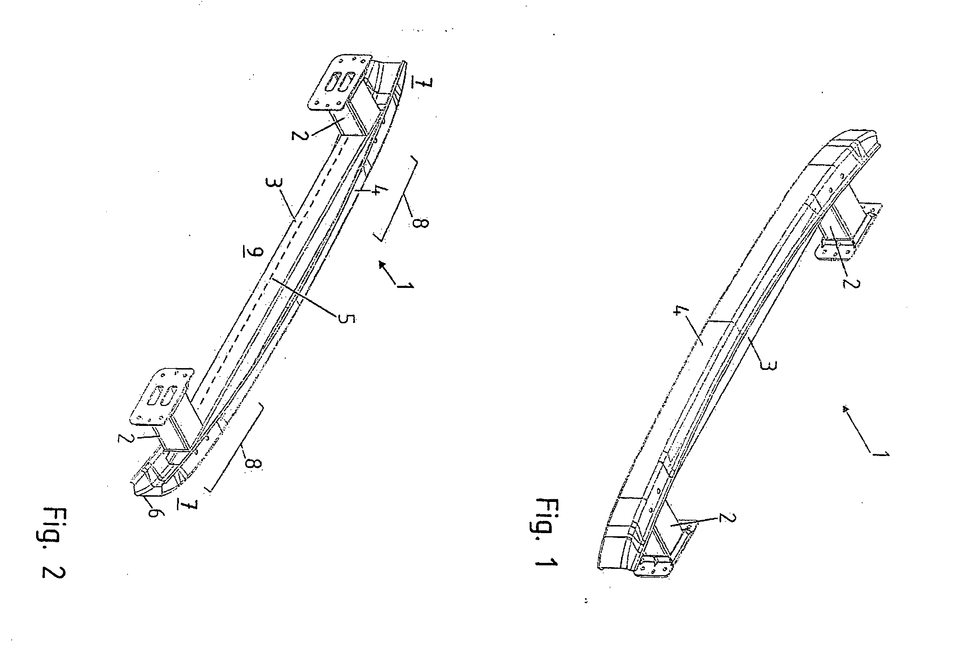

Figur 1 zeigt eine erfindungsgemäße Kraftfahrzeugstoßfängeranordnung 1, welche zwei Crashboxen 2, einen Querträger 3 und ein Blechbauteil 4 aufweist.

Figur 2 zeigt die gleiche Kraftfahrzeugstoßfängeranordnung 1 in einer perspektivischen Ansicht von hinten. Hierbei ist gut zu erkennen, dass der Querträger 3 über seine Längsachse 5 einen geradlinigen Verlauf aufweist. Der Querträger 3 ist jeweils endseitig mit den Crashboxen 2 gekoppelt. Das Blechbauteil 4 selbst weist einen hutförmig verlaufenden Querschnitt 6 auf. An den Enden 7 überragt das Blechbauteil 4 den Querträger 3 jeweils außenseitig. Ebenso überlappt das Blechbauteil 4 den Querträger 3 zumindest bereichsweise in jeweils einem Abschnitt 8, der sich nahe der Enden 7 des Blechbauteils 4 bzw. sich endseitig von dem Querträger 3 zur Fahrzeugmitte 9 hin orientiert.

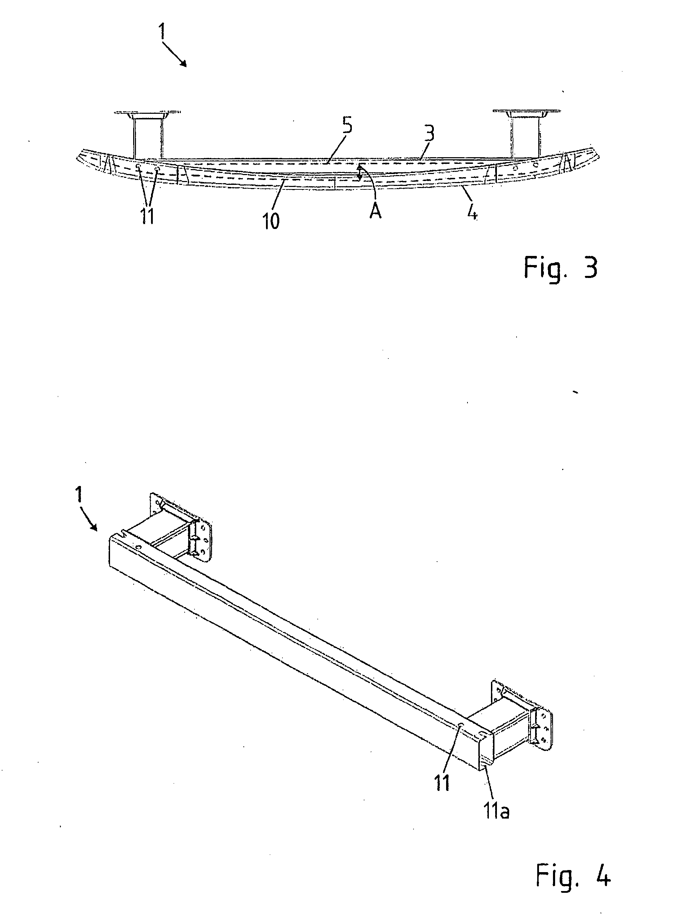

Figur 3 zeigt die erfindungsgemäße Kraftfahrzeugstoßfängeranordnung 1 in einer Ansicht von oben. Hier ist gut zu erkennen, dass der geradlinige Verlauf des Querträgers 3 und ein hierzu bogenförmiger Verlauf entlang der Längsachse 10 des Blechbauteils 4 mit einem über die Längsrichtung variierenden Abstand A zueinander ausgebildet sind. Weiterhin sind endseitig an dem Querträger 3 im Bereich der Crashboxen 2 jeweils zwei Aufnahmeöffnungen 11 dargestellt, mit denen das Blechbauteil 4 an dem Querträger 3 gekoppelt ist.

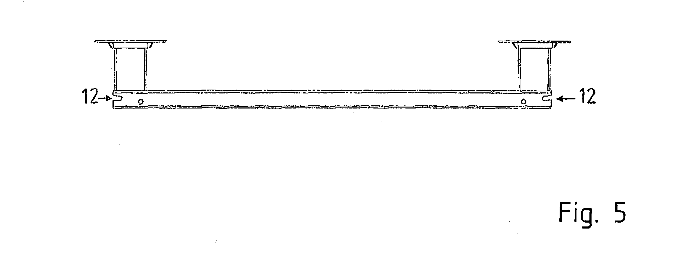

Figur 4 zeigt eine perspektivische Ansicht der Kraftfahrzeugstoßfängeranordnung 1 ohne Blechbauteil 4. Hierbei ist zu erkennen, dass die Aufnahmeöffnung 11 ebenfalls in dem Querträger 3 ausgebildet ist. Die jeweils endseitige Aufnahmeöffnung 11 a ist gemäß Figur 4 und besser in Figur 5 erkennbar, als Langloch 12 ausgebildet, wobei das Langloch 12 jeweils endseitig offen ist.

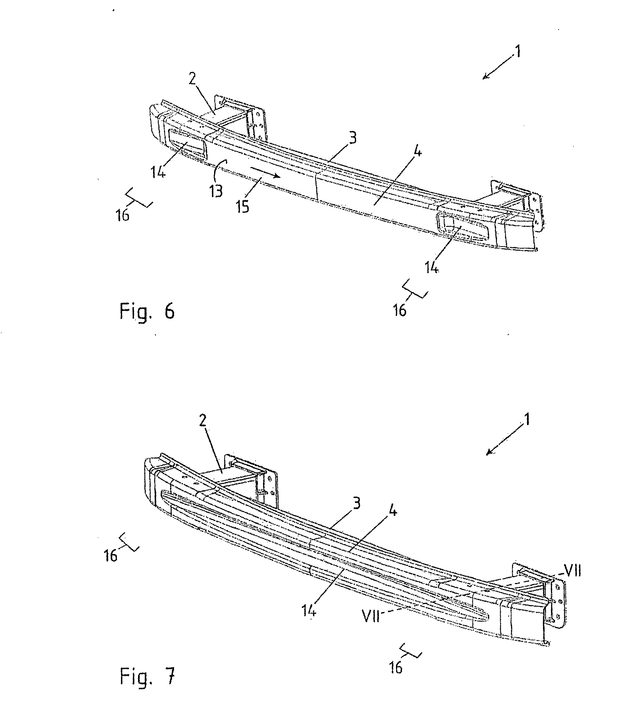

Figur 6 zeigt eine erfindungsgemäße Kraftfahrzeugstoßfängeranordnung 1, wobei das Blechbauteil 4 an einer Stirnseite 13 zwei Sicken 14 aufweist. Die Sicken 14 sind dabei in Längsrichtung 15 auf Höhe eines Anbindungsbereiches 16 der Crashboxen 2 derart angeordnet, dass sie zumindest abschnittsweise mit dem hinter dem Blechbauteil 4 liegenden Querträger 3 oder aber mit den Crashboxen 2 direkt zumindest abschnittsweise flächig zur Anlage kommen.

Figur 7 zeigt eine weitere Ausführungsvariante, wobei hier das Blechbauteil 4 mit einer einteiligen Sicke 14 ausgebildet ist, die wiederum in dem Anbindungsbereich 16 zumindest abschnittsweise flächig zur Anlage mit dem hinter dem Blechbauteil 4 liegenden Querträger 3 oder aber mit den Crashboxen 2 kommt. Hierdurch wird im Falle eines Crashes ein direkter Kraftfluss der Aufprallenergie sichergestellt.

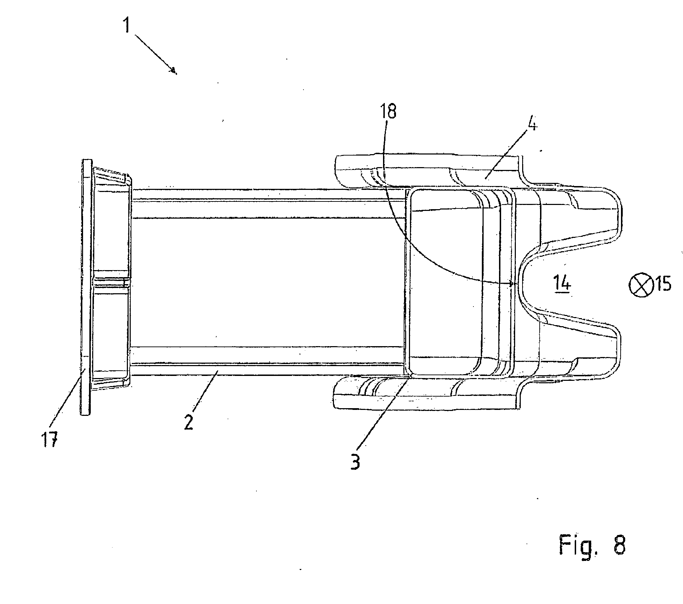

Figur 8 zeigt eine Schnittansicht entlang der Schnittlinie VII-VII von Figur 7. Hierbei ist auf die Bildebene bezogen von links nach rechts noch einmal der Aufbau der erfindungsgemäßen Kraftfahrzeugstoßfängeranordnung 1 gezeigt. Die Anbindung an ein hier nicht näher dargestelltes Kraftfahrzeug erfolgt über eine Flanschplatte 17, gefolgt von einer Crashbox 2. An die Crashbox 2 ist ein Querträger 3, vorzugsweise aus einfachem Strangpressprofil mit gradlinigem Verlauf gekoppelt. Mit dem Querträger 3 ist wiederum ein Blechbauteil 4 gekoppelt, welches eine hier dargestellte einteilige Sicke 14 über den wesentlichen Verlauf in Längsrichtung 15 aufweist. Die Sicke 14 kommt dabei in einem Anlagebereich 18 zumindest abschnittsweise mit dem Querträger 3 zur Anlage. Im Falle eines Fahrzeugcrashes erfolgt eine direkte Kraftleitung der Aufprallenergie von dem Blechbauteil 4 in den Querträger 3 und wiederum in die Crashboxen 2.

### Bezugszeichen:

- 1: - Kraftfahrzeugstoßfängeranordnung
- 2: - Crashbox
- 3: - Querträger
- 4: - Blechbauteil
- 5: - Längsachse zu 3
- 6: - Querschnitt zu 4
- 7: - Ende
- 8: - Abschnitt
- 9: - Fahrzeugmitte
- 10: - Längsachse zu 4
- 11: - Aufnahmeöffnung
- 11a: - endseitige Aufnahmeöffnung
- 12: - Langloch
- 13: - Stirnseite
- 14: - Sicke
- 15: - Längsrichtung
- 16: - Anbindungsbereich
- 17: - Flanschplatte
- 18: - Anlagebereich

- A: - Abstand

## Patentansprüche

1. Kraftfahrzeugstoßfängeranordnung (1), aufweisend einen Querträger (3), an welchem Crashboxen (2) gekoppelt sind, wobei der Querträger (3) aus einem Strangpressprofil besteht, **dadurch gekennzeichnet, dass** auf der den Crashboxen (2) gegenüberliegenden Seite des Querträgers (3) ein Blechbauteil (4) aus einer Stahllegierung mit dem Querträger (3) stoffschlüssig und/oder formschlüssig gekoppelt ist, wobei das Blechbauteil (4) in Längsrichtung einen bogenförmigen Verlauf aufweist und dass der Querträger (3) als geradlinig verlaufendes Mehrkammerhohlprofil aus einem Leichtmetall ausgebildet ist.

2. Kraftfahrzeugstoßfängeranordnung nach Anspruch 1, **dadurch gekennzeichnet, dass** der Querträger (3) und das Blechbauteil (4) über eine Schraubverbindung gekoppelt sind.

3. Kraftfahrzeugstoßfängeranordnung nach Anspruch 1 oder 2, **dadurch gekennzeichnet, dass** das Blechbauteil (4) mittels Warmumformen und Presshärten hergestellt ist.

4. Kraftfahrzeugstoßfängeranordnung nach einem der Ansprüche 1 bis 3, **dadurch gekennzeichnet, dass** das Blechbauteil (4) den Querträger (3) endseitig überlappt.

5. Kraftfahrzeugstoßfängeranordnung nach einem der Ansprüche 1 bis 4, **dadurch gekennzeichnet, dass** das Blechbauteil (4) jeweils endseitig zum Kraftfahrzeug hin gerichtet eine Krümmung aufweist.

6. Kraftfahrzeugstoßfängeranordnung nach einem der Ansprüche 1 bis 5, **dadurch gekennzeichnet, dass** das Blechbauteil (4) im Querschnitt (6) C-förmig konfiguriert ist oder dass das Blechbauteil (4) im Querschnitt (6) hutförmig konfiguriert ist.

7. Kraftfahrzeugstoßfängeranordnung nach einem der Ansprüche 1 bis 6, **dadurch gekennzeichnet, dass** der Querträger (3) und/oder das Blechbauteil (4) Ausnehmungen zur Gewichtsreduzierung aufweisen.

8. Kraftfahrzeugstoßfängeranordnung nach einem der Ansprüche 1 bis 7, **dadurch gekennzeichnet, dass** der Querträger (3) endseitig jeweils zwei Aufnahmeöffnungen (11) aufweist, wobei eine außenliegende Aufnahmeöffnung (11) als Langloch (12) ausgebildet ist, vorzugsweise als außenseitig offenes Langloch (12).

9. Kraftfahrzeugstoßfängeranordnung nach einem der Ansprüche 1 bis 8, **dadurch gekennzeichnet, dass** das Blechbauteil (4) für das jeweilige mit der Kraftfahrzeugstoßfängeranordnung (1) auszurüstende Fahrzeug crashoptimiert ist.

10. Kraftfahrzeugstoßfängeranordnung nach einem der Ansprüche 1 bis 9, **dadurch gekennzeichnet, dass** das Blechbauteil (4) zumindest abschnittsweise in einem Anbindungsbereich (16) der Crashboxen (2) an einer Stirnseite (13) des Querträgers (3) zur Anlage kommt, vorzugsweise weist das Blechbauteil (4) eine Sicke (14) auf, wobei die Sicke (14) zumindest abschnittsweise mit dem Querträger (3) zur Anlage kommt.

## Claims

1. Vehicle bumper arrangement (1) comprising a bumper beam (3) to which crash boxes (2) are coupled, the bumper beam (3) consisting of an extruded profile, **characterised in that** a sheet metal component (4) made from a steel alloy is coupled to the bumper beam (3) by interlocking and/or frictional engagement on the side of the bumper beam (3) located opposite the crash boxes (2), the sheet metal component (4) having a curved configuration in the longitudinal direction and the bumper beam (3) being embodied as a linearly extending multi-chamber hollow profile made from a light metal.

2. Vehicle bumper arrangement according to claim 1, **characterised in that** the bumper beam (3) and the sheet metal component (4) are coupled by means of a screw connection.

3. Vehicle bumper arrangement according to claim 1 or 2, **characterised in that** the sheet metal component (4) has been produced by hot forming and press hardening.

4. Vehicle bumper arrangement according to one of claims 1 to 3, **characterised in that** the sheet metal component (4) overlaps the bumper beam (3) at its ends.

5. Vehicle bumper arrangement according to one of claims 1 to 4, **characterised in that** the sheet metal component (4) has, at its ends, a curvature directed towards the vehicle.

6. Vehicle bumper arrangement according to one of claims 1 to 5, **characterised in that** the sheet metal component (4) is of C-shaped configuration in cross-section (6) or the sheet metal component (4) is of hat-shaped configuration in cross-section (6).

7. Vehicle bumper arrangement according to one of claims 1 to 6, **characterised in that** the bumper beam (3) and/or the sheet metal component (4) has recesses to reduce its weight.

8. Vehicle bumper arrangement according to one of claims 1 to 7, **characterised in that** the bumper beam (3) comprises two accommodating openings (11) at its ends, an external accommodating opening (11) being configured as a slot (12), preferably as an externally open slot (12).

9. Vehicle bumper arrangement according to one of claims 1 to 8, **characterised in that** the sheet metal component (4) is crash-optimised for the particular vehicle that is to be fitted with the vehicle bumper arrangement (1).

10. Vehicle bumper arrangement according to one of claims 1 to 9, **characterised in that** the sheet metal component (4) comes to abut at least in parts on an end face (13) of the bumper beam (3), in an area of attachment (16) of the crash boxes (2), the sheet metal component (4) preferably having a bead (14), the bead (14) abutting at least in parts on the bumper beam (3).

## Revendications

1. Ensemble formant pare-chocs de véhicule automobile (1), présentant une poutre de pare-chocs (3), au niveau duquel sont couplés des caissons amortisseurs (2), dans lequel la poutre de pare-chocs (3) est constitué d'un profilé extrudé, **caractérisé en ce qu'**un composant en tôle (4) constitué d'un alliage en acier est couplé a la poutre de pare-chocs (3) par liaison de matière et/ou par complémentarité de forme sur le côté de la poutre de pare-chocs (3) faisant face aux caissons amortisseurs (2), le composant en tôle (4) présentant dans la direction longitudinale une allure incurvée, et **en ce que** la poutre de pare-chocs (3) est réalisé sous la forme d'un profilé creux à chambres multiples s'étendant de manière rectiligne et constitué d'un métal léger.

2. Ensemble formant pare-chocs de véhicule automobile selon la revendication 1, **caractérisé en ce que** la poutre de pare-chocs (3) et le composant en tôle (4) sont couplés par l'intermédiaire d'un assemblage par vissage.

3. Ensemble formant pare-chocs de véhicule automobile selon la revendication 1 ou 2, **caractérisé en ce que** le composant en tôle (4) est fabriqué au moyen d'une mise en forme à chaud et d'une trempe sous presse.

4. Ensemble formant pare-chocs de véhicule automobile selon l'une quelconque des revendications 1 à 3, **caractérisé en ce que** le composant en tôle (4) chevauche côté extrémité la poutre de pare-chocs(3).

5. Ensemble formant pare-chocs de véhicule automobile selon l'une quelconque des revendications 1 à 4, **caractérisé en ce que** le composant en tôle (4) présente respectivement une courbure en direction du véhicule automobile côté extrémité.

6. Ensemble formant pare-chocs de véhicule automobile selon l'une quelconque des revendications 1 à 5, **caractérisé en ce que** le composant en tôle (4) est configuré de manière à présenter dans la section transversale (6) une forme de C, ou **en ce que** le composant en tôle (4) est configuré de manière à présenter dans la section transversale (6) une forme de chapeau.

7. Ensemble formant pare-chocs de véhicule automobile selon l'une quelconque des revendications 1 à 6, **caractérisé en ce que** la poutre de pare-chocs (3) et/ou le composant en tôle (4) présentent des évidements aux fins de la réduction de poids.

8. Ensemble formant pare-chocs de véhicule automobile selon l'une quelconque des revendications 1 à 7, **caractérisé en ce que** la poutre de pare-chocs (3) présente côté extrémité respectivement deux orifices de logement (11) un orifice de logement (11) se trouvant à l'extérieur étant réalisé sous la forme d'un trou oblong (12), de préférence sous la forme d'un trou oblong (12) ouvert côté extérieur.

9. Ensemble formant pare-chocs de véhicule automobile selon l'une quelconque des revendications 1 à 8, **caractérisé en ce que** le composant en tôle (4) est optimisé en cas de collision pour le véhicule respectif devant être équipé de l'ensemble formant pare-chocs de véhicule automobile (1).

10. Ensemble formant pare-chocs de véhicule automobile selon l'une quelconque des revendications 1 à 9, **caractérisé en ce que** le composant en tôle (4) vient en appui au moins par endroits dans une zone de liaison (16) des caissons amortisseurs (2) au niveau d'un côté frontal (13) de la poutre de pare-chocs (3), **en ce que** de préférence le composant en tôle (4) présente une moulure (14), la moulure (14) venant en appui au moins par endroits avec la poutre de pare-chocs (3).
